# FASCICULE DE BREVET EUROPEEN

(11) **EP 4 008 585 B1**
(45) Date de publication et mention de la délivrance du brevet: **02.08.2023**
(21) Numéro de dépôt: 21204862.3
(22) Date de dépôt: 26.10.2021
(51) Int. Cl.: B60N 2/42, B60N 2/24, B60N 2/50

(54) **SIEGE DE VEHICULE PROTEGE CONTRE LES MINES TERRESTRES ET DESTINE A UN VEHICULE MILITAIRE**
FAHRZEUGSITZ, DER GEGEN LANDMINEN GESCHÜTZT UND FÜR EIN MILITÄRFAHRZEUG BESTIMMT IST
VEHICLE SEAT PROTECTED AGAINST LANDMINES AND INTENDED FOR A MILITARY VEHICLE

(30) Priorité: 04.12.2020 FR 2012689
(43) Date de publication de la demande: 08.06.2022
(73) Titulaire: SeatTec France, 67560 Rosheim (FR)
(72) Inventeur: BLASS, Siegfried, 92289 Ursensollen (DE)
(74) Mandataire: Merckling, Norbert

(56) Documents cités:
- DE-A1- 3 612 474
- DE-A1- 10 130 632
- US-A1- 2008 015 753

## Description

### Domaine technique

La présente invention concerne un siège de véhicule protégé contre les mines terrestres et destiné à un véhicule militaire. Un tel siège comporte une partie inférieure à fixer au véhicule militaire, une partie supérieure pour une plaque d'assise du siège de véhicule, et un châssis à ciseaux monté sur ressort situé entre la partie inférieure et la partie supérieure et dont un premier axe est fixé à demeure au niveau de la partie inférieure et de la partie supérieure et dont un second axe est guidé avec un mouvement linéaire le long d'un dispositif de guidage fourni au niveau de la partie inférieure et de la partie supérieure.

### Technique antérieure

Le document DE 10 2018 008 659 A1 (au nom de SeatTec Sitztechnik GmbH) décrit un siège de véhicule avec un châssis de base qui présente une paire de parties de jambes espacées latéralement l'une de l'autre et reliées au niveau de leurs sections d'extrémité antérieures au moyen d'un organe axial à partir duquel un dispositif formant palier et destiné à la plaque d'assise du siège de véhicule se trouve en porte-à-faux vers l'arrière. Le dispositif formant palier est fourni de manière élastique au niveau de l'organe axial en vue d'une sollicitation mécanique du siège de véhicule allant jusqu'à une valeur d'accélération au moins approximativement perpendiculaire déterminée. La liaison entre les parties de jambes et l'organe axial peut être déformée plastiquement en cas de sollicitation mécanique excédant ladite valeur d'accélération et forme un amortisseur de collision. Ce siège de véhicule connu est en particulier utilisé dans le cas de véhicules militaires qui se déplacent par exemple dans un champ de mines terrestres. Comme on le sait, le danger de rouler sur une mine terrestre est que cela entraine une explosion pouvant gravement blesser ou, dans un cas extrême, tuer un occupant du siège du véhicule militaire. Le document DE 101 30 632 A1 montre aussi un tel siège de véhicule.

### Présentation de l'invention

La présente invention a pour but de créer un siège de véhicule protégé contre les mines terrestres, du type mentionné en préambule, qui convienne de manière optimale pour absorber des forces issues d'une explosion de mine, dans lequel l'utilisateur du siège de véhicule est protégé contre les forces explosives mettant sa vie en danger.

Le but de la présente invention est atteint grâce à un siège de véhicule protégé contre les mines terrestres et destiné à un véhicule militaire, avec une partie inférieure à fixer au véhicule militaire, une partie supérieure pour une plaque d'assise du siège de véhicule, et un châssis à ciseaux monté sur ressort et situé entre la partie inférieure et la partie supérieure et dont respectivement un premier axe est fixé à demeure au niveau de la partie inférieure et de la partie supérieure (14) et dont respectivement un second axe est guidé avec un mouvement linéaire le long d'un dispositif de guidage fourni au niveau de la partie inférieure et de la partie supérieure, caractérisé en ce qu'un élément de crémaillère est fixé au niveau du second axe, associé à la partie inférieure du siège de véhicule, du châssis à ciseaux, et en ce qu'une paire d'éléments de mâchoire tenus latéralement à distance de l'élément de crémaillère au moyen d'un dispositif de verrouillage du siège de véhicule pendant un état de fonctionnement normal du véhicule militaire sont prévus au niveau de la partie inférieure à côté de l'élément de crémaillère et, dans le cas d'une explosion de mine où la distance en hauteur entre la partie supérieure et la partie inférieure du siège de véhicule est réduite à un minimum du fait de l'inertie du siège de véhicule occupé par un utilisateur du siège, le dispositif de verrouillage déverrouille automatiquement les éléments de mâchoire et un dispositif à ressort relie les deux éléments de mâchoire à l'élément de crémaillère par engagement mutuel avec complémentarité de forme et de force.

Un retour du siège de véhicule à sa position de départ ainsi qu'un mouvement oscillant vers le haut et vers le bas du siège de véhicule sont ainsi empêchés.

Pour le siège de véhicule protégé contre les mines selon la présente invention, il est possible d'utiliser de manière avantageuse un châssis à ciseaux monté sur ressort connu en soi avec des parties inférieure et supérieure, qui est structurellement complété de manière simple afin d'obtenir une protection optimale en cas d'explosion de mine terrestre. Des essais avec des mannequins positionnés sur le siège de véhicule selon la présente invention pendant que le siège de véhicule équipé est exposé à une charge explosive présentant un effet correspondant à celui d'une mine terrestre ont montré que le mannequin positionné sur le siège de véhicule est protégé de manière optimale contre les forces de l'explosion.

Il s'est révélé utile que l'élément de crémaillère soit conçu avec une fente longitudinale et qu'un dispositif de guidage, s'étendant vers le haut sur la partie inférieure du siège de véhicule, à travers la fente longitudinale soit prévu pour un guidage longitudinal sans jeu de l'élément de crémaillère. Grâce à cela, il est possible de parvenir à ce que l'élément de crémaillère effectue en raison de l'inertie de l'occupant de siège un mouvement linéaire défini jusqu'au minimum de la distance en hauteur entre la partie supérieure et la partie inférieure du siège de véhicule, c'est-à-dire jusqu'à ce que l'on appelle son état de blocage, lorsque des forces explosives correspondantes agissent.

Concernant le siège de véhicule selon la présente invention, il est avantageux que l'élément de crémaillère, au niveau de ses deux bords longitudinaux parallèles entre eux, soit réalisé avec une denture dont les dents sont orientées de manière inclinée obliquement vers l'avant dans le sens longitudinal de siège, et que les deux éléments de mâchoire soient respectivement formés avec une denture orientée de manière inclinée vers l'arrière dans la direction longitudinale et dont la forme correspond auxdits éléments de mâchoire.

Lorsqu'il est question que les dents de l'élément de crémaillère soient orientées de manière inclinée obliquement vers l'avant dans la direction longitudinale du siège de véhicule, cela signifie que les dents sont orientées vers l'avant dans la direction allant du second axe mobile au premier axe immobile. En conséquence, les éléments de mâchoire sont réalisés avec des dents orientées obliquement vers l'arrière dans la direction longitudinale du siège de véhicule.

Il est ainsi possible, après une explosion de mine, lorsque plus aucune force explosive n'agit sur le siège de véhicule, que les dentures des deux éléments de mâchoire viennent en prise avec complémentarité de forme et de force dans les dentures de l'élément de crémaillère, de sorte qu'un mouvement de retour du siège de véhicule dans sa position de départ est empêché. Comme précédemment mentionné, cela veut dire qu'un mouvement d'oscillation vers le haut et vers le bas du siège de véhicule est avantageusement empêché.

Afin de verrouiller solidement les dentures des deux éléments de mâchoire avec les dentures présentes au niveau des deux bords longitudinaux parallèles de l'élément de crémaillère en cas d'explosion de mine, il s'est révélé avantageux que les deux éléments de mâchoire soient montés au niveau de la partie inférieure du siège de véhicule de manière à pouvoir se déplacer parallèlement. A cet effet, l'élément de mâchoire respectif est de manière préférée relié mobile à la partie inférieure du siège de véhicule au moyen d'une paire de leviers de liaison.

Pour le siège de véhicule selon la présente invention, il s'est révélé avantageux qu'un élément formant crochet s'étende vers le haut sur l'élément de mâchoire respectif et que les deux éléments formant crochet soient reliés l'un à l'autre au moyen d'un élément formant ressort de tension précontraint mécaniquement et formant le dispositif à ressort.

Selon la présente invention, l'élément de mâchoire respectif peut être réalisé avec un évidement, et un élément formant levier à deux bras peut être fourni pivotant au niveau de la partie inférieure du siège de véhicule en étant associé à l'élément de mâchoire respectif, dans lequel une patte de verrouillage venant en prise dans l'évidement associé, est réalisée au niveau d'un côté intérieur d'un bras de levier, et un élément de déverrouillage est associé au second bras de levier, situé du côté extérieur, de l'élément formant levier.

Pour qu'un verrouillage fiable de l'élément formant levier respectif avec l'élément de mâchoire associé soit obtenu dans l'état de fonctionnement normal du siège de véhicule selon la présente invention, il s'est révélé avantageux qu'un élément formant ressort de tension, précontraint mécaniquement et au moyen duquel l'élément formant levier associé est maintenu dans sa position de verrouillage, vienne en prise avec le second bras de levier respectif situé du côté extérieur. L'élément de déverrouillage prévu pour déverrouiller l'élément formant levier respectif peut être fixé au niveau du châssis à ciseaux.

Afin de définir le minimum, mentionné ci-dessus, de la distance en hauteur (état de blocage) entre la partie supérieure et la partie inférieure du siège de véhicule, il est utile que des éléments formant tampon de butée, auxquels sont associés des éléments de contre-butée pouvant être fixés au châssis à ciseaux, s'étendent vers le haut sur les bords longitudinaux de la partie inférieure du siège de véhicule.

### Brève description des figures

D'autres détails, caractéristiques et avantages résultent de la description, détaillée ci-dessous, d'un exemple de réalisation du siège de véhicule protégé contre les mines et destiné à un véhicule militaire, selon la présente invention, représenté dans le dessin donné à titre d'exemple illustratif et non limitatif dans lequel :

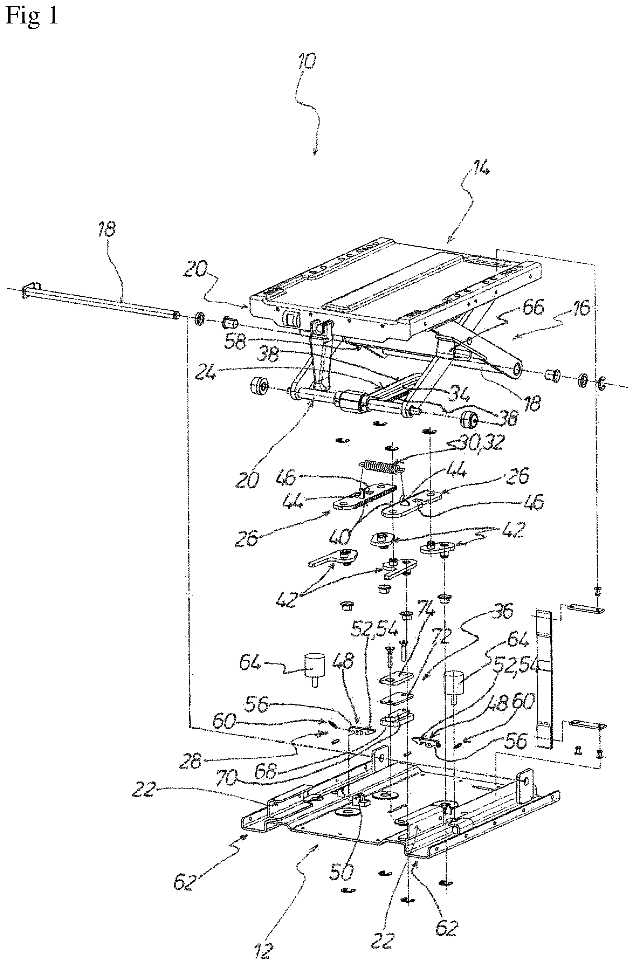

La figure 1 est une vue en éclatée en perspective d'un exemple de réalisation d'un siège de véhicule, conforme à l'invention.

### Description détaillée de l'invention

La figure 1 montre le siège de véhicule 10 monté sur ressort protégé contre les mines terrestres avec une partie inférieure 12, une partie supérieure 14 et un châssis à ciseaux 16 qui relie d'une manière connue en soi la partie inférieure 12 à la partie supérieure 14 de sorte qu'elle soit mobile en hauteur. La partie inférieure 12 est utilisée pour la fixation au véhicule militaire. La partie supérieure 14 est destiné au montage d'une plaque d'assise (non représentée) du siège de véhicule 10. La plaque d'assise peut être rembourrée.

Le châssis à ciseaux 16 avec la partie inférieure 12 et la partie supérieure 14 peut être un châssis à ciseaux monté sur ressort connu.

Le châssis à ciseaux 16 est fixé immobile à la partie inférieure 12 et à la partie supérieure 14 respectivement grâce à un premier axe 18. De plus, le châssis à ciseaux 16 est guidé de manière linéairement mobile respectivement grâce à un second axe 20, sur la partie inférieure 12 et sur la partie supérieure 14, le long d'un dispositif de guidage 22 associé.

Sur la figure 1, seul le dispositif de guidage 22 fourni au niveau de la partie inférieure 12 est visible. Un dispositif de guidage 22 correspondant destiné au second axe 20 associé est également fourni au niveau de la partie supérieure 14. Un élément de crémaillère 24 est fixé au voisinage de la partie inférieure 12, sur le second axe 20 associé à la partie inférieure 12 du siège de véhicule 10. Une paire d'éléments de mâchoire 26, fixés de manière mobile à la partie inférieure 12 et espacés latéralement par rapport à l'élément de crémaillère 24 au moyen d'un dispositif de verrouillage 28 du siège de véhicule 10 en fonctionnement normal, c'est-à-dire dans l'état de conduite du véhicule militaire, sont fournis à côté de l'élément de crémaillère 24.

Lors d'une explosion de mine, au cours de laquelle la distance en hauteur entre la partie supérieure 14 et la partie inférieure 12 du siège de véhicule 10 monté sur ressort est réduite par exemple à un minimum (état de blocage), du fait de l'inertie du siège de véhicule 10 occupé par un utilisateur, les dispositifs de verrouillage 28 sont déverrouillés de sorte qu'un dispositif à ressort 30, formé d'un ressort de tension 32 précontraint mécaniquement et reliant les deux éléments de mâchoire 26 l'un à l'autre, met en prise avec complémentarité de forme et de force, c'est-à-dire verrouille ensemble, la denture des éléments de mâchoire 26 avec les dentures de l'élément de crémaillère 26.

L'élément de crémaillère 24 comporte en son centre une fente longitudinale 34 à travers laquelle s'étend un dispositif de guidage 36 qui est fixé à la partie inférieure 14 et est prévu pour un guidage longitudinal sans jeu de l'élément de crémaillère 24 notamment en cas d'explosion.

L'élément de crémaillère 24 est réalisé au niveau de ses deux bords longitudinaux parallèles respectivement avec une denture 38 et les deux éléments de mâchoire 26 sont réalisés respectivement avec une denture 40 tournée vers lesdites dentures 38 et présentant une forme leur correspondant. Les dents de la denture 38 de l'élément de crémaillère 24 sont orientées de manière inclinée obliquement vers l'avant dans la direction longitudinale de siège. Les dents des dentures 40 des deux éléments de mâchoire 26 sont réalisées d'une manière qui leur est adaptée grâce à une denture orientée de manière inclinée obliquement vers l'arrière.

Les deux éléments de mâchoire 26 sont fournis au niveau de la partie inférieure 12 du siège de véhicule 10 de manière à pouvoir se déplacer parallèlement l'un à l'autre. A cet effet, l'élément de mâchoire 26 respectif est relié à la partie inférieure 12 au moyen d'une paire de leviers de liaison 42.

Un élément formant crochet 44 s'étend vers le haut sur l'élément de mâchoire 26 respectif. Le ressort de tension 32 précontraint mécaniquement du dispositif à ressort 30 est fixé aux éléments formant crochet 44 des deux éléments de mâchoire 26.

L'élément de mâchoire 26 respectif est réalisé avec un évidement 46 destiné à un élément formant levier 48 à deux bras, prévu oscillant au niveau de la partie inférieure (12) du siège de véhicule (10), qui fait partie du dispositif de verrouillage 28. Les éléments formant levier 48 sont montés pivotants au niveau de la partie inférieure 12 au moyen d'éléments formant palier 50. Les éléments formant levier 48 sont associés aux éléments de mâchoire 26. Une patte de verrouillage 54 qui, lorsque le dispositif de verrouillage 28 est verrouillé, se trouve en prise dans l'évidement 46 associé de l'élément de mâchoire 26 correspondant, est fournie au niveau d'un bras de levier 52, situé du côté intérieur, de l'élément formant levier 48 respectif. Un élément de déverrouillage 58 fixé au châssis à ciseaux 16 est associé à l'autre bras de levier 56, situé du côté extérieur, de l'élément formant levier 48 respectif. Un élément formant ressort de tension 60 précontraint mécaniquement, au moyen duquel l'élément formant levier 48 associé est maintenu dans la position de verrouillage jusqu'à ce qu'une explosion de mine se produise, agit sur le second bras de levier 56 respectivement situé du côté intérieur.

Des éléments formant tampon 64, auxquels sont associés des éléments de contre-butée 66, s'étendent vers le haut sur les bords longitudinaux 62 de la partie inférieure 12 du siège de véhicule 10. Les éléments de contre-butée 66 sont fixés au châssis à ciseaux 16.

Le dispositif de guidage 36 destiné à l'élément de crémaillère 24 et fixé à la partie inférieure 12 présente un élément de base 68 avec une nervure de guidage 70 qui s'étend sans jeu dans la fente longitudinale 34 de l'élément de crémaillère 24, une partie centrale 72 et une partie terminale 74, qui sont fixés ensemble au niveau de la partie inférieure 12 après que l'élément de crémaillère 24 a été positionné au niveau de l'élément de base 68.

### Liste des références numériques

10 siège de véhicule
12 partie inférieure (de 10)
14 partie supérieure (de 10)
16 châssis à ciseaux (de 10 entre 12 et 14)
18 premier axe à demeure (de 16)
20 second axe à mouvement linéaire (de 16)
22 dispositif de guidage (destiné à 20)
24 élément de crémaillère (au niveau de 20 pour 12)
26 élément de mâchoire (au niveau de 12 pour 24)
28 dispositif de verrouillage (destiné à 26)
30 dispositif à ressort (de 28 et destiné à 26)
32 ressort de tension (de 30)
34 fente longitudinale (dans 24 et destinée à 36)
36 dispositif de guidage (destiné à 24)
38 dentures (de 24)
40 denture (de 26)
42 levier de liaison (entre 26 et 12)
44 élément formant crochet (au niveau de 26 et destiné à 30 ou 32)
46 évidement (dans 26 et destiné à 48)
48 élément formant levier (de 28)
50 élément formant palier (au niveau de 12 et destiné à 48)
52 bras de levier situé du côté tourné vers l'intérieur (de 48)
54 patte de verrouillage (au niveau de 52 et destinée à 46)
56 bras de levier situé du côté tourné vers l'extérieur (de 48)
58 élément de déverrouillage (destiné à 56)
60 élément formant ressort de tension (au niveau de 56)
62 bords longitudinaux (de 12)
64 éléments formant tampon (au niveau de 62)
66 éléments de contre-butée (au niveau de 16 et destinés à 64)
68 élément de base (de 22 au niveau de 12)
70 nervure de guidage (au niveau de 68 et destinée à 34)
72 partie centrale (de 22)
74 partie terminale (de 22)

## Revendications

1. Siège de véhicule (10) protégé contre les mines terrestres et destiné à un véhicule militaire, avec une partie inférieure (12) à fixer au véhicule militaire (10), une partie supérieure (14) pour une plaque d'assise du siège de véhicule (10), et un châssis à ciseaux (16) monté sur ressort et situé entre la partie inférieure (12) et la partie supérieure (14) et dont respectivement un premier axe (18) est fixé à demeure au niveau de la partie inférieure (12) et de la partie supérieure (14) et dont respectivement un second axe (20) est guidé avec un mouvement linéaire le long d'un dispositif de guidage (22) fourni au niveau de la partie inférieure (12) et de la partie supérieure (14), **caractérisé en ce qu'**un élément de crémaillère (24) est fixé au niveau du second axe (20), associé à la partie inférieure (12) du siège de véhicule (10), du châssis à ciseaux (16), et **en ce qu'**une paire d'éléments de mâchoire (26) tenus latéralement à distance de l'élément de crémaillère (24) au moyen d'un dispositif de verrouillage (28) du siège de véhicule (10), dans l'état de conduite normal du véhicule militaire, sont prévus au niveau de la partie inférieure (12) à côté de l'élément de crémaillère (24) et, dans le cas d'une explosion de mine où la distance en hauteur entre la partie supérieure (14) et la partie inférieure (12) du siège de véhicule (10) est réduite à un minimum du fait de l'inertie du siège de véhicule (10) occupé par un utilisateur, le dispositif de verrouillage (28) déverrouille les éléments de mâchoire (26) et un dispositif à ressort (30) relie les deux éléments de mâchoire (26) à l'élément de crémaillère (24) par engagement mutuel avec complémentarité de forme et de force.

2. Siège de véhicule selon la revendication 1, **caractérisé en ce que** l'élément de crémaillère (24) est réalisé avec une fente longitudinale (34), et **en ce qu'**un dispositif de guidage (36) s'étendant vers le haut à partir de la partie inférieure (12) et à travers la fente longitudinale (34), ledit dispositif de guidage (36) étant destiné à un guidage longitudinal sans jeu de l'élément de crémaillère (24).

3. Siège de véhicule selon la revendication 1 ou 2, **caractérisé en ce que** l'élément de crémaillère (24) présente, au niveau de ses deux bords longitudinaux parallèles entre eux, respectivement une denture (38) dont les dents sont orientées de manière inclinée obliquement vers l'avant dans la direction longitudinale de siège, et **en ce que** les deux éléments de mâchoire (26) sont réalisés respectivement avec une denture (40) de forme correspondante, orientée de manière inclinée obliquement vers l'arrière dans la direction longitudinale de siège.

4. Siège de véhicule selon l'une quelconque des revendications 1 à 3, **caractérisé en ce que** les deux éléments de mâchoire (26) sont montés mobiles parallèlement au niveau de la partie inférieure (12) du siège de véhicule (10).

5. Siège de véhicule selon la revendication 4, **caractérisé en ce que** l'élément de mâchoire (26) respectif est fixé mobile à la partie inférieure (12) du siège de véhicule (10) au moyen d'une paire de leviers de liaison (42).

6. Siège de véhicule selon l'une quelconque des revendications 1 à 5, **caractérisé en ce que** un élément formant crochet (44) s'étend vers le haut sur l'élément de mâchoire (26) respectif, et **en ce que** les deux éléments formant crochet (44) sont reliés l'un à l'autre au moyen d'un élément formant ressort de tension (32) précontraint mécaniquement et formant le dispositif à ressort (30).

7. Siège de véhicule selon l'une quelconque des revendications 1 à 6, **caractérisé en ce que** l'élément de mâchoire (26) respectif est réalisé avec un évidement (46), et **en ce qu'**un élément formant levier (48) à deux bras est prévu oscillant au niveau de la partie inférieure (12) du siège de véhicule (10) de manière associée à l'élément de mâchoire (26) respectif, dans lequel une patte de verrouillage (54) venant en prise dans l'évidement (46) associé est réalisée au niveau d'un bras de levier (52) situé du côté tourné vers l'intérieur et un élément de déverrouillage (58) est associé au second bras de levier (56), situé du côté tourné vers l'extérieur, de l'élément formant levier (48).

8. Siège de véhicule selon la revendication 7, **caractérisé en ce que** un élément formant ressort de tension (60), précontraint mécaniquement et au moyen duquel l'élément formant levier (48) associé est temporairement maintenu dans sa position de verrouillage, vient en prise avec le second bras de levier (52) respectif situé du côté tourné vers l'extérieur.

9. Siège de véhicule selon la revendication 7, **caractérisé en ce que** l'élément de déverrouillage (58) respectif est fixé au châssis à ciseaux (16).

10. Siège de véhicule selon l'une quelconque des revendications 1 à 9, **caractérisé en ce que** des éléments formant tampon de butée (64) auxquels sont associés des éléments de contre-butée (66) s'étendent vers le haut sur des bords longitudinaux (62) de la partie inférieure (12) du siège de véhicule (10).

11. Siège de véhicule selon la revendication 10, **caractérisé en ce que** les éléments de contre-butée (66) sont fixés au châssis à ciseaux (16).

## Patentansprüche

1. Landminengeschützter Fahrzeugsitz (10) für ein Militärfahrzeug, mit einem am Militärfahrzeug (10) zu befestigenden Unterteil (12), einem Oberteil (14) für eine Sitzplatte des Fahrzeugsitzes (10) , und einem gefederten Scherengestell (16) zwischen dem Unterteil (12) und dem Oberteil (14), das jeweils mit einer ersten Achse (18) am Unterteil (12) und am Oberteil (14) ortsfest angebracht ist und das jeweils mit einer zweiten Achse (20) entlang einer am Unterteil (12) und am Oberteil (14) vorgesehenen Führungseinrichtung (22) linear beweglich geführt ist, **dadurch gekennzeichnet, dass** an der dem Unterteil (12) des Fahrzeugsitzes (10) zugeordneten zweiten Achse (20) des Scherengestells (16) ein Zahnstangenelement (24) angebracht ist, und dass am Unterteil (12) seitlich neben dem Zahnstangenelement (24) ein Paar Zahnbackenelemente (26) vorgesehen sind, die im normalen Fahrzustand des Militärfahrzeugs (10) mittels einer Verriegelungseinrichtung (28) des Fahrzeugsitzes (10) vom Zahnstangenelement (24) seitlich beabstandet sind und im Minen-Explosionszustand, in welchem der Höhenabstand zwischen dem Oberteil (14) und dem Unterteil (12) des Fahrzeugsitzes (10) infolge der Massenträgheit des von einem Fahrer besetzten Fahrzeugsitzes (10) auf ein Minimum reduziert ist, die Verriegelungseinrichtung (28) die Zahnbackenelemente (26) entriegelt und eine Federeinrichtung (30) die beiden Zahnbackenelemente (26) mit dem Zahnstangenelement (24) form- und kraftschlüssig verbindet.

2. Fahrzeugsitz nach Anspruch 1, **dadurch gekennzeichnet, dass** das Zahnstangenelement (24) mit einem Längsschlitz (34) ausgebildet ist, und dass vom Unterteil (12) des Fahrzeugsitzes (10) eine Führungseinrichtung (36) nach oben steht, die sich durch den Längsschlitz (34) erstreckt und zur spielfreien Längsführung des Zahnstangenelementes (24) vorgesehen ist.

3. Fahrzeugsitz nach Anspruch 1 oder 2, **dadurch gekennzeichnet, dass** das Zahnstangenelement (24) an seinen beiden zueinander parallelen Längsrändern jeweils mit einer Zahnung (38) ausgebildet ist, deren Zähne in Sitz-Längsrichtung schräg nach vorwärts geneigt orientiert sind, und dass die beiden Zahnbackenelemente (26) jeweils mit einer daran formmäßig entsprechenden, in Sitz-Längsrichtung schräg nach rückwärts geneigt orientierten Zahnung (40) ausgebildet sind.

4. Fahrzeugsitz nach einem der Ansprüche 1 bis 3, **dadurch gekennzeichnet, dass** die beiden Zahnbackenelemente (26) am Unterteil (12) des Fahrzeugsitzes (10) zueinander parallel beweglich vorgesehen sind.

5. Fahrzeugsitz nach Anspruch 4, **dadurch gekennzeichnet, dass** das jeweilige Zahnbackenelement (26) mittels eines Paares von Verbindungshebeln (42) am Unterteil (12) des Fahrzeugsitzes (10) beweglich angebracht ist.

6. Fahrzeugsitz nach einem der Ansprüche 1 bis 5, **dadurch gekennzeichnet, dass** vom jeweiligen Zahnbackenelement (26) ein Hakenelement (44) nach oben steht, und dass die beiden Hakenelemente (44) mittels eines die Federeinrichtung (30) bildenden, mechanisch vorgespannten Zugfederelementes (32) miteinander verbunden sind.

7. Fahrzeugsitz nach einem der Ansprüche 1 bis 6, **dadurch gekennzeichnet, dass** das jeweilige Zahnbackenelement (26) mit einer Aussparung (46) ausgebildet ist, und dass am Unterteil (12) des Fahrzeugsitzes (10) dem jeweiligen Zahnbackenelement (26) zugeordnet ein zweiarmiges Hebelelement (48) schwenkbeweglich vorgesehen ist, wobei am innenseitigen einen Hebelarm (52) eine in die zugehörige Aussparung (46) einrastende Rastnase (54) ausgebildet ist, und dem außenseitigen zweiten Hebelarm (56) des Hebelelementes (48) ein Entriegelungselement (58) zugeordnet ist.

8. Fahrzeugsitz nach Anspruch 7, **dadurch gekennzeichnet, dass** am jeweiligen außenseitigen zweiten Hebelarm (52) ein mechanisch vorgespanntes Zugfederelement (60) angreift, mittels welchem das zugehörige Hebelelement (48) temporär in seiner Verriegelungsstellung gehalten wird.

9. Fahrzeugsitz nach Anspruch 7, **dadurch gekennzeichnet, dass** das jeweilige Entriegelungselement (58) am Scherengestell (16) angebracht ist.

10. Fahrzeugsitz nach einem der Ansprüche 1 bis 9, **dadurch gekennzeichnet, dass** von den Längsrändern (62) des Unterteils (12) des Fahrzeugsitzes (10) Anschlag-Pufferelemente (64) nach oben stehen, welchen Gegenanschlagelemente (66) zugeordnet sind.

11. Fahrzeugsitz nach Anspruch 10, **dadurch gekennzeichnet, dass** die Gegenanschlagelemente (66) am Scherengestell (16) angebracht sind.

## Claims

1. Vehicle seat (10) protected against landmines and intended for a military vehicle, with a lower part (12) to be fixed to the military vehicle (10), an upper part (14) for a seat plate of the vehicle seat (10), and a spring-mounted scissor frame (16) located between the lower part (12) and the upper part (14) and respectively a first axis (18) of which is permanently fixed at the lower part (12) and the upper part (14) and respectively a second axis (20) of which is guided with a linear movement along a guide device (22) provided at the lower part (12) and the upper part (14), **characterised in that** a rack element (24) is fixed at the second axis (20), associated with the lower part (12) of the vehicle seat (10), of the scissor frame (16), and **in that** a pair of jaw elements (26) held laterally at a distance from the element rack (24) by means of a locking device (28) of the vehicle seat (10), in the normal driving state of the military vehicle, are provided at the lower part (12) next to the rack element (24), and in the case of a mine explosion where the height distance between the upper part (14) and the lower part (12) of the vehicle seat (10) is reduced to a minimum due to the inertia of the vehicle seat (10) occupied by a user, the locking device (28) unlocks the jaw elements (26) and a spring device (30) connects the two jaw elements (26) to the rack element (24) by mutual engagement in form and force locking manner.

2. Vehicle seat according to claim 1, **characterised in that** the rack element (24) is formed with a longitudinal slot (34), and **in that** a guide device (36) extends upwards from the lower part (12) and through the longitudinal slot (34), said guide device (36) being intended for a play-free longitudinal guide of the rack element (24).

3. Vehicle seat according to claim 1 or 2, **characterised in that** the rack element (24) respectively has, at its two mutually parallel longitudinal edges, one set of teeth (38), the teeth of which are inclined obliquely towards the front in the longitudinal direction of the seat, and **in that** the two jaw elements (26) are respectively formed with a correspondingly shaped set of teeth (40), which are inclined obliquely towards the rear in the longitudinal direction of the seat.

4. Vehicle seat according to any one of claims 1 to 3, **characterised in that** the two jaw elements (26) are mounted so as to be movable parallel at the lower part (12) of the vehicle seat (10).

5. Vehicle seat according to claim 4, **characterised in that** the respective jaw element (26) is movably fixed to the lower part (12) of the vehicle seat (10) by means of a pair of connecting levers (42).

6. Vehicle seat according to any one of Claims 1 to 5, **characterised in that** a hook element (44) extends upwards on the respective jaw element (26), and **in that** the two hook elements (44) are connected to one another by means of a mechanically prestressed tension spring element (32) forming the spring device (30).

7. Vehicle seat as according to any one of claims 1 to 6, **characterised in that** the respective jaw element (26) is formed with a recess (46), and **in that** a two-armed lever element (48) is provided oscillating at the lower portion (12) of the vehicle seat (10) in association with the respective jaw element (26), wherein a locking tab (54) engaging in the associated recess (46) is formed at a lever arm (52) located on the side facing inward and an unlocking element (58) is associated with the second lever arm (56), located on the side facing outward, of the lever element (48).

8. Vehicle seat according to Claim 7, **characterised in that** a mechanically prestressed tension spring element (60), by means of which the associated lever element (48) is temporarily held in its locking position, engages with the respective second lever arm (52) on the side facing outwards.

9. Vehicle seat according to claim 7, **characterised in that** the respective unlocking element (58) is fixed to the scissor frame (16).

10. Vehicle seat according to any one of claims 1 to 9, **characterised in that** stop buffer elements (64) with associated counter-stop elements (66) extend upwardly on longitudinal edges (62) of the lower part (12) of the vehicle seat (10).

11. Vehicle seat according to claim 10, **characterised in that** the counter-stop elements (66) are fixed to the scissor frame (16).
